# FASCICULE DE BREVET EUROPEEN

(11) **EP 2 131 414 B1**
(45) Date de publication et mention de la délivrance du brevet: **03.08.2011**
(21) Numéro de dépôt: 09161381.0
(22) Date de dépôt: 28.05.2009
(51) Int. Cl.: H01M 2/10

(54) **Connecteur, notamment pour dispositif de stockage d'énergie**
Anschluss, insbesondere für Energiespeichervorrichtung
Connector, in particular for an energy storage device

(30) Priorité: 02.06.2008 FR 0853600; 02.06.2008 FR 0853602; 02.06.2008 FR 0853603
(43) Date de publication de la demande: 09.12.2009
(73) Titulaire: Valeo Equipements Electriques Moteur, 94046 Créteil Cedex (FR)
(72) Inventeur: Guerin, Fabien, 92320 Chatillon (FR); Abadia, Roger, 93360 Neuilly-Plaisance (FR); Hosni, Alexis, 75018 Paris (FR)
(74) Mandataire: de Lambilly Delorme, Marie Pierre

(56) Documents cités:
- EP-A- 0 552 737
- WO-A-2008/001017
- WO-A-2008/001022
- FR-A- 2 883 670
- FR-A- 2 903 059
- US-A1- 2001 003 414

## Description

L'invention concerne un connecteur, notamment pour dispositif de stockage d'énergie, en particulier pour équiper un véhicule automobile.

De manière connue, sur un véhicule automobile, un dispositif de stockage d'énergie peut être prévu pour être chargé lors d'une phase de freinage récupératif et déchargé lors de phases de démarrage et d'accélération du véhicule.

Le dispositif de stockage d'énergie peut comporter une chaîne de cellules de stockage d'énergie connectées en série, ces cellules comportant par exemple chacune un super-condensateur.

Des différences de tension de charge peuvent apparaître entre les cellules du fait notamment :
- de différences entre les valeurs de capacité inhérentes à la fabrication des cellules,
- de l'existence de courants de fuite d'intensités différentes.

La persistance de ces écarts dans le temps peut provoquer le vieillissement accéléré, voire la destruction, des cellules qui supportent des tensions de charge les plus élevées.

Il est connu de prévoir une unité électronique pourvue d'un circuit d'équilibrage pour corriger ces déséquilibres.

On peut se référer par exemple à la demande de brevet US 2003/0214267, et le document FR-A-2 883670 décrit un connecteur pour dispositif de stockage d'energie. Il est en outre nécessaire de prévoir une unité de connexion comportant une pluralité de voies d'échange de signaux permettant de connecter l'unité électronique à un ou plusieurs appareils extérieurs.

Ces différents éléments, et d'autres encore, utiles au fonctionnement du dispositif de stockage d'énergie sont à monter sur ce dispositif sans nuire à son étanchéité.

L'un des buts de l'invention est de répondre à cette exigence.

Par ailleurs le dispositif de stockage d'énergie doit être relié par exemple à une batterie du véhicule automobile par l'intermédiaire d'une borne électrique de puissance.

Un autre but de l'invention est de fournir un nouveau connecteur comportant une telle borne électrique de puissance.

L'invention a ainsi pour objet, selon l'un de ses aspects, un connecteur, notamment pour dispositif de stockage d'énergie, le connecteur comportant :
- une unité électronique, notamment agencée pour l'un au moins commander le dispositif de stockage d'énergie et générer une information représentative de l'état du dispositif de stockage d'énergie par exemple en vue de réaliser un diagnostic du dispositif de stockage d'énergie,
- une unité de connexion électrique, d'une part, connectée à l'unité électronique et, d'autre part, agencée pour pouvoir être connectée à un élément de connexion complémentaire, cette unité de connexion présentant notamment une pluralité de voies d'échange de signaux,
- un support réalisé d'un seul tenant, notamment par moulage d'une matière plastique, l'unité électronique et l'unité de connexion étant portées par ce support.

Grâce à l'invention, du fait que plusieurs éléments, à savoir par exemple l'unité électronique et l'unité de connexion, soient montés sur un même support de manière à former un ensemble pouvant être mis en place à un seul emplacement, notamment sur une paroi du dispositif de stockage d'énergie, il est possible d'obtenir plus facilement une étanchéité satisfaisante entre l'intérieur et l'extérieur du dispositif de stockage d'énergie, comparé par exemple au cas où ces différents éléments seraient disposés dans plusieurs ouvertures de la paroi du dispositif de stockage d'énergie.

De plus, lorsque le support portant l'unité électronique est réalisé en matière plastique, il est plus aisé d'éviter des problèmes de court-circuit qui, le cas échéant, pourraient apparaître lorsque l'unité électronique est fixée directement sur une partie métallique du dispositif de stockage d'énergie.

Le support, lorsqu'il est réalisé en matière plastique, peut, si on le souhaite, présenter d'excellentes caractéristiques de planéité, ce qui peut être avantageux en cas d'utilisation d'un joint d'étanchéité qui est alors comprimé correctement pour assurer une meilleure étanchéité.

Le support peut porter, le cas échéant, d'autres éléments utiles au dispositif de stockage d'énergie.

Par exemple, le connecteur peut comporter une unité d'aération portée par le support.

Dans un exemple de mise en oeuvre de l'invention, l'unité d'aération comporte une membrane perméable à l'air. Cette membrane est par exemple du type commercialisé sous la marque Gore-tex.

Le support peut comporter un orifice et l'unité d'aération peut être disposée dans cet orifice.

Le support peut comporter une paroi sensiblement plane et l'unité électronique peut être disposée au moins partiellement en regard de cette paroi sensiblement plane.

Si on le souhaite, l'unité d'aération est disposée en regard de l'unité électronique, sur cette paroi sensiblement plane.

Dans un exemple de mise en oeuvre de l'invention, le connecteur comporte une borne électrique de puissance portée par le support.

Avantageusement l'unité électronique comporte une carte électronique fixée sur le support, notamment par sertissage, bouterollage ou vissage.

De préférence, le support est réalisé en matière plastique, et l'unité de connexion comporte au moins un élément de contact électrique partiellement noyé dans la matière plastique du support.

L'invention a également pour objet un ensemble, notamment agencé pour être monté sur un véhicule automobile, comportant :
- un dispositif de stockage d'énergie, notamment comprenant une pluralité de cellules de stockage d'énergie, comportant une cuve, notamment dans laquelle sont disposées les cellules de stockage d'énergie,
- un connecteur tel que défini ci-dessus, fixé sur la cuve du dispositif de stockage d'énergie.

Avantageusement la cuve du dispositif de stockage d'énergie comporte une ouverture, notamment sur une paroi latérale de la cuve, agencée pour recevoir partiellement le connecteur.

Dans un exemple de mise en oeuvre de l'invention, les cellules de stockage d'énergie sont partiellement noyées dans une résine déposée à l'intérieur de la cuve, et la cuve comporte un muret agencé pour séparer la résine d'un compartiment recevant le connecteur.

Si on le souhaite, l'unité électronique du connecteur est agencée pour permettre l'équilibrage de la charge électrique entre les cellules de stockage d'énergie.

L'invention a encore pour objet, indépendamment ou en combinaison avec ce qui précède, un connecteur, notamment pour dispositif de stockage d'énergie, le connecteur comportant :
- un support réalisé en matière plastique,
- une armature, notamment métallique, au moins partiellement noyée dans la matière plastique du support,
- une borne électrique de puissance montée sur l'armature.

Grâce à l'invention, l'armature permet de renforcer la tenue mécanique de la borne de puissance à un couple de serrage exercé dessus.

Avantageusement l'armature comporte un métal, étant notamment réalisée à partir d'une tôle telle qu'une tôle en acier.

Dans un exemple de mise en oeuvre de l'invention, l'armature comporte un cadre, notamment de forme sensiblement rectangulaire, et cette armature comporte une portion de fixation de la borne électrique de puissance s'étendant à l'intérieur du cadre. La borne de puissance est par exemple soudée sur l'armature.

Si on le souhaite, la portion de fixation de la borne électrique peut être reliée au cadre par l'intermédiaire de deux branches de l'armature.

De préférence, le connecteur comporte au moins une trace de puissance disposée à proximité de la borne électrique de puissance, cette trace comportant une cosse métallique et étant notamment agencée pour être connectée à une batterie de stockage d'énergie.

Dans un exemple de mise en oeuvre de l'invention, le connecteur comporte trois traces électriques disposées autour de la borne électrique de puissance, ces trois traces formant notamment trois secteurs régulièrement répartis autour de la borne électrique de puissance.

Le connecteur peut par exemple comporter une bague isolante sur laquelle s'étendent les traces de puissance, cette bague isolante étant agencée de manière à ce que les traces s'étendent dans un plan surélevé par rapport à un plan du support. Cette bague peut en outre permettre d'isoler électriquement les traces vis-à-vis de la borne et entre elles.

Dans un exemple de mise en oeuvre de l'invention, le connecteur comporte une unité électronique et une unité de connexion électrique connectée à cette unité électronique, l'unité de connexion électrique comportant notamment une pluralité de voies d'échange de signaux.

Le support peut comporter une paroi, notamment sensiblement plane, et une unité d'aération comprenant une membrane perméable à l'air directement fixée sur la paroi du support.

Ladite paroi du support peut comporter une portion formant grille sensiblement en regard de la membrane de l'unité d'aération.

L'invention a également pour objet un ensemble, notamment agencé pour être monté sur un véhicule automobile, comportant un connecteur comprenant une paroi sensiblement plane et une unité d'aération pourvue d'une membrane perméable à l'air et imperméable à l'eau, la membrane étant fixée sur la paroi du connecteur, en recouvrement d'un orifice formé sur celui-ci.

L'invention a encore pour objet un ensemble, notamment agencé pour être monté sur un véhicule automobile, comportant :
- un dispositif de stockage d'énergie, notamment comprenant une pluralité de cellules de stockage d'énergie, comportant une cuve, notamment dans laquelle sont disposées les cellules de stockage d'énergie,
- un connecteur tel que défini ci-dessus, monté sur la cuve.

L'invention a également pour objet, indépendamment ou en combinaison avec ce qui précède, un ensemble, notamment agencé pour être monté sur un véhicule automobile, comportant :
- un dispositif de stockage d'énergie, notamment comprenant une pluralité de cellules de stockage d'énergie, comportant une cuve, notamment dans laquelle sont disposées les cellules de stockage d'énergie, la cuve comportant des demi-coquilles inférieure et supérieure assemblées ensemble, la cuve comprenant un fond formé sur la demi-coquille inférieure et un compartiment débouchant à l'extérieur sur le fond de la cuve,
- un connecteur comportant une unité électronique et un support portant l'unité électronique, l'unité électronique étant introduite au moins partiellement dans ledit compartiment de la cuve.

Les demi-coquilles peuvent présenter des formes et/ou dimensions différentes d'une demi-coquille à l'autre, ou en variante être symétrique.

Grâce à l'invention, du fait que l'unité électronique soit introduite dans le compartiment par le fond de la cuve, l'interface entre les deux demi-coquilles peut être totalement libre pour la mise en place d'une étanchéité, par exemple un joint d'étanchéité.

Dans un exemple de mise en oeuvre de l'invention, le fond de la cuve s'étend sensiblement parallèlement à un plan, et le support du connecteur comporte une face inclinée par rapport audit plan. Le compartiment de la cuve débouche de préférence sur le fond par une face inclinée contre laquelle s'applique la face inclinée du support du connecteur.

Avantageusement un joint d'étanchéité est disposé entre les faces inclinées respectives du support du connecteur et du compartiment de la cuve.

L'invention permet d'assurer une étanchéité satisfaisante entre l'intérieur et l'extérieur de la cuve, au niveau du connecteur.

L'interface entre la cuve et le connecteur suivant un plan incliné est très avantageux en termes de gestion de l'étanchéité, par rapport par exemple à une interface sur deux plans perpendiculaires.

Dans un exemple de mise en oeuvre de l'invention, le fond de la cuve s'étend sensiblement parallèlement à un plan, et l'unité électronique comporte une carte électronique, la carte électronique s'étendant dans le compartiment de la cuve perpendiculairement au plan du fond de la cuve.

Si on le souhaite, la cuve comporte au moins une patte de maintien et la carte électronique est maintenue à l'aide de cette patte de maintien à une extrémité de la carte éloignée du fond de la cuve. Ceci peut être utile lorsque le dispositif subit des vibrations.

Avantageusement la carte électronique est solidarisée à la patte de maintien par au moins un élément de fixation, notamment une agrafe, disposé entre la carte électronique et la patte de maintien.

Dans un exemple de mise en oeuvre de l'invention, le support de l'unité électronique comporte une unité de connexion électrique, d'une part connectée à l'unité électronique et d'autre part agencée pour pouvoir être connectée à un élément de connexion complémentaire depuis l'extérieur de la cuve.

Si on le souhaite, l'unité de connexion électrique s'étend sensiblement perpendiculairement à une paroi latérale de la cuve.

L'unité électronique peut comporter une carte électronique, et la carte électronique peut être disposée sur le support uniquement sensiblement le long d'un bord de cette carte, laquelle comporte au moins un autre bord éloigné du support.

Le connecteur peut par exemple être fixé sur la cuve de manière amovible, notamment à l'aide d'au moins une vis.

Dans un exemple de mise en oeuvre de l'invention, l'ensemble peut comporter au moins une borne électrique de puissance montée sur la cuve à un emplacement distinct de celui du connecteur.

Avantageusement une résine est déposée dans la cuve, et le compartiment de la cuve pour recevoir l'unité électronique comporte un muret séparant la résine de l'unité électronique.

Le cas échéant, l'unité électronique présente une hauteur supérieure à celle de la demi-coquille inférieure de la cuve lorsque l'unité électronique est introduite dans le compartiment de la cuve.

La cellule de stockage d'énergie comporte par exemple au moins un super-condensateur. En variante, la cellule de stockage d'énergie peut comporter par exemple une batterie Li-On (Lithium- Ion), Ni-Mh (Nickel- Métal hydrure) ou au Plomb.

De préférence, l'unité électronique comporte un circuit d'équilibrage des cellules de stockage d'énergie. En variante, d'autres types de cartes électroniques peuvent être prévus.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un dispositif de stockage d'énergie équipé d'un connecteur conformément à un exemple de mise en oeuvre de l'invention,
- les figures 2 à 6 représentent, schématiquement et partiellement, différentes vues du connecteur de la figure 1, à différentes étapes d'assemblage,
- la figure 7 illustre, schématiquement et partiellement, en perspective, un dispositif de stockage d'énergie avec un connecteur conforme à un autre exemple de mise en oeuvre de l'invention,
- la figure 8 est une vue de détail, schématique et partielle, en perspective, du dispositif de stockage d'énergie et du connecteur de la figure 7,
- la figure 9 est une vue isolée, schématique et partielle, du connecteur des figures 7 et 8,
- les figures 10 et 11 représentent, schématiquement et partiellement, le connecteur de la figure 9 à différentes étapes d'assemblage,
- la figure 12 représente, schématiquement et partiellement, en perspective, un dispositif de stockage d'énergie conforme à un autre exemple de mise en oeuvre de l'invention,
- la figure 13 représente, schématiquement et partiellement, en perspective, le dispositif de la figure 12, sans la demi-coquille supérieure de la cuve,
- la figure 14 représente, schématiquement et partiellement, différents éléments du dispositif de la figure 13,
- la figure 15 représente, schématiquement et partiellement, en coupe, le dispositif de la figure 13, et
- la figure 16 est une vue en coupe, schématique et partielle, d'un connecteur conforme à un autre exemple de mise en oeuvre de l'invention.

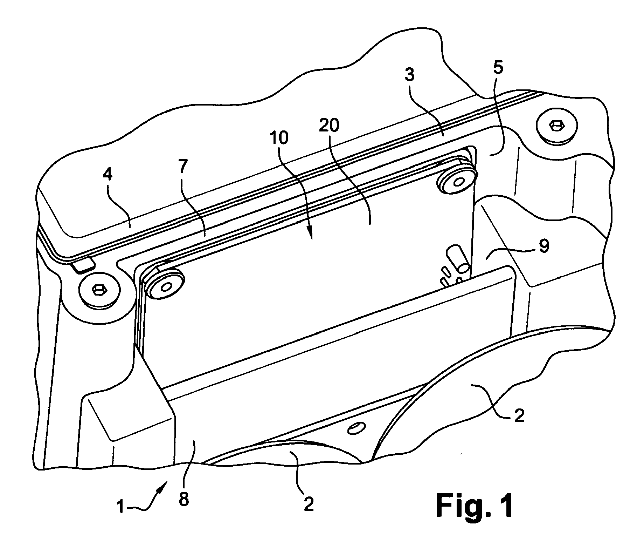

On a représenté sur la figure 1 un dispositif de stockage d'énergie 1 pour un dispositif micro-hybride à alterno-démarreur pour véhicule automobile.

Le cas échéant, le dispositif micro-hybride comprend un système de freinage récupératif.

Le dispositif 1 comporte une pluralité de cellules de stockage d'énergie 2 disposées dans une cuve 3, et noyée partiellement dans une résine déposée dans le fond de la cuve 3.

Chaque cellule 2 comprend un super-condensateur ou EDLC en anglais (*electrochemical double layer capacitator).*

En variante, les cellules 2 peuvent comporter une batterie Li-On (Lithium-Ion), Ni-Mh (Nickel- Métal hydrure) ou au Plomb.

La cuve 3 comporte une demi-coquille 4 formant le fond de cette cuve 3 et présentant une paroi latérale 5.

Cette paroi latérale 5 comporte une ouverture 7, dans l'exemple décrit de forme sensiblement rectangulaire, agencée pour recevoir un connecteur 10.

La cuve 3 comprend en outre un muret 8 agencé pour séparer la résine dans la cuve 3 d'un compartiment 9 recevant le connecteur 10.

Ce connecteur 10 est par exemple vissé sur la paroi latérale 5.

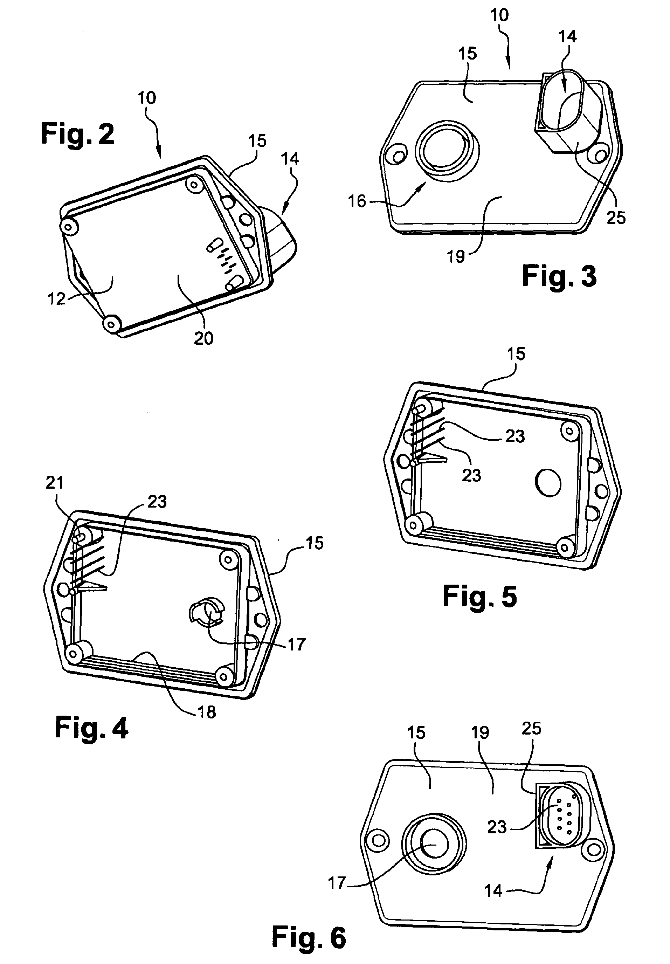

Comme on peut le voir sur les figures 2 à 6, le connecteur 10 comporte:
- une unité électronique 12 agencée pour contrôler et équilibrer les cellules de stockage d'énergie 2 et générer une information représentative de l'état du dispositif de stockage d'énergie 1, par exemple en vue de réaliser un diagnostic des cellules 2,
- une unité de connexion électrique 14, d'une part, connectée à l'unité électronique 12 et, d'autre part, agencée pour pouvoir être connectée à un élément de connexion complémentaire non représenté, cette unité de connexion 14 présentant une pluralité de voies d'échange de signaux, par exemple au nombre de huit dans le présent exemple,
- un support 15 réalisé d'un seul tenant, par moulage d'une matière thermoplastique telle du PBT (Polybutylène Téréphtalate) chargé, l'unité électronique 12 et l'unité de connexion 14 étant portées par ce support 15.

Le support 15 porte d'autres éléments utiles au dispositif de stockage d'énergie 1.

Le connecteur 10 comporte une unité d'aération 16 portée par le support 15.

L'unité d'aération 16 comporte une membrane perméable à l'air. Cette membrane est par exemple du type commercialisé sous la marque Gore-tex.

Le support 15 comporte un orifice 17, visible sur les figures 4 et 6, et l'unité d'aération 16 est disposée dans cet orifice 17.

On peut se référer par exemple au brevet US 7,166,024 qui décrit une telle unité d'aération.

Le support 15 comporte une paroi sensiblement plane 19 et l'unité électronique 12 est disposée en regard de cette paroi sensiblement plane 19.

L'unité d'aération 16 est disposée en regard de l'unité électronique 16 sur cette paroi sensiblement plane 19.

L'unité électronique 12 comporte une carte électronique 20 fixée sur un rebord annulaire 18 du support 15 via des plots 21 de ce support 15, comme on peut le voir sur la figure 4.

Ces plots 21 sont déformés pour maintenir la carte électronique 20.

En variante, les plots 21 peuvent être agencés pour permettre de visser ou d'encliqueter la carte électronique 20 sur le support.

L'unité de connexion 14 comprend une pluralité d'éléments de contact électrique, comportant des tiges 23, partiellement noyés dans la matière plastique du support 15.

L'unité de connexion 14 comporte une paroi tubulaire 25 entourant les éléments de connexion 23.

Dans l'exemple qui vient d'être décrit, le connecteur 10 est dépourvu de borne électrique de puissance.

Bien entendu, on ne sort pas du cadre de la présente invention lorsque le connecteur comporte d'autres éléments utiles au fonctionnement du dispositif de stockage d'énergie, parmi lesquels au moins une borne électrique de puissance.

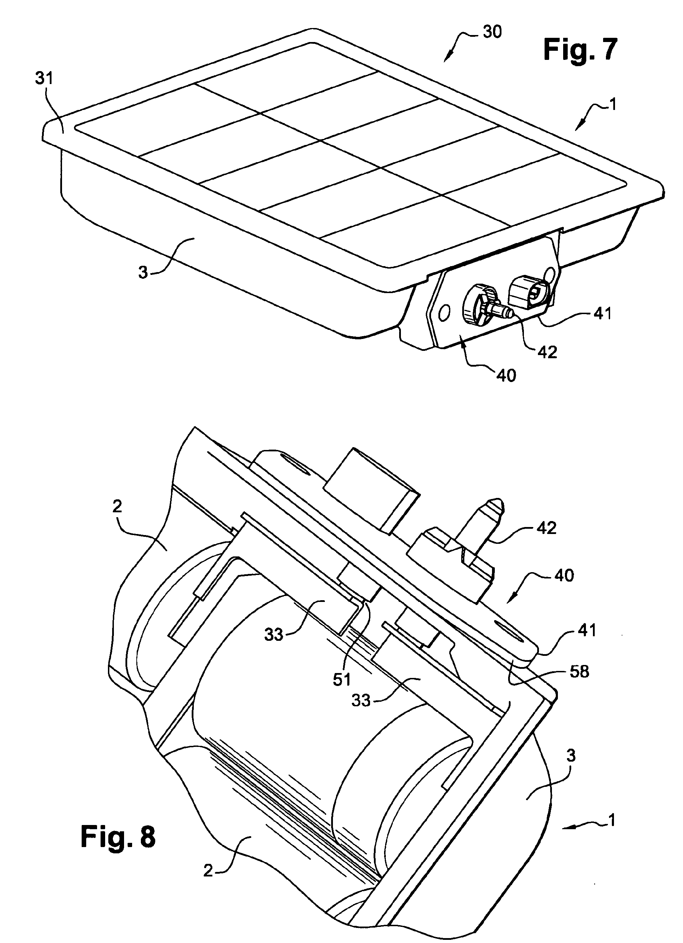

On a représenté sur la figure 7 un ensemble 30 comprenant un dispositif de stockage d'énergie 1 et un connecteur 40.

Comme décrit précédemment, le dispositif 1 comporte un couvercle 31 pour fermer la cuve 3.

Le connecteur 40 comporte un support 41 réalisé en matière plastique et portant une borne électrique de puissance 42.

Des cosses 33 associées à cette borne 42 sont prévues à l'intérieur de la cuve 3 pour relier électriquement les cellules 2 entre elles, comme illustré sur la figure 8.

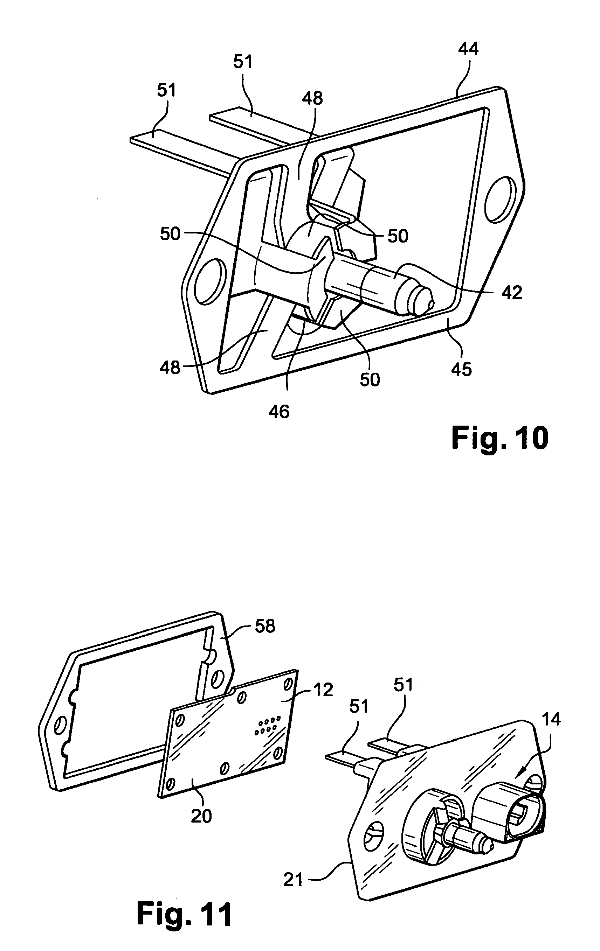

Le connecteur 40 comporte une armature métallique 44 (voir figure 10) noyée dans la matière plastique du support 40 lors du moulage de celui-ci.

L'armature 44 permet de renforcer la tenue de la borne de puissance 42 à un couple de serrage exercé dessus.

Dans l'exemple décrit, l'armature 44 est réalisée à partir d'une tôle telle qu'une tôle en acier, et comporte un cadre 45 de forme sensiblement rectangulaire.

Cette armature 44 comporte en outre une portion de fixation 46 de la borne électrique de puissance 42, à l'intérieur du cadre 45.

La borne de puissance 42 est par exemple soudée sur l'armature 44.

La portion de fixation 46 de la borne électrique 42 est reliée au cadre 45 par l'intermédiaire de deux branches 48.

Si on le souhaite, davantage de branches 48 peuvent être prévues.

Le connecteur 40 comporte trois traces de puissance 50 disposées à proximité de la borne de puissance 42, ces traces 50 comportant une cosse métallique 51 et étant notamment agencées pour être connectées à une batterie du véhicule.

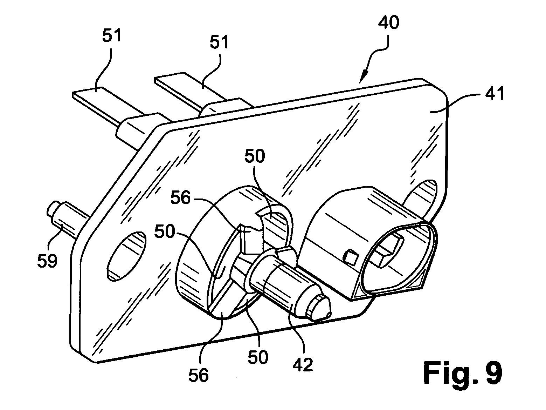

Les trois traces électriques 50 disposées autour de la borne de puissance 42 forment trois secteurs régulièrement répartis autour de la borne électrique de puissance 42 (voir notamment figure 9).

Le connecteur 40 comporte une bague isolante 55 sur laquelle s'étendent les traces de puissance 50, cette bague 55 étant agencée de manière à ce que les traces 50 s'étendent dans un plan surélevé par rapport à un plan parallèle du support 41.

Les traces 50 sont isolées électriquement de la borne de puissance 42.

Ces traces 50 sont également isolées électriquement les unes des autres.

Après surmoulage de l'armature 44 par la matière plastique du support 41, la borne de puissance 42 est entourée par trois nervures radiales 56 (voir figures 9) et les cosses 51 sont noyées dans la matière plastique à l'exception de leurs extrémités.

Deux des trois cosses 51 sont reliées entre elles afin d'être au même potentiel électrique.

A l'instar du connecteur 10 décrit précédemment, le connecteur 40 comporte une unité électronique 12 pourvue d'une carte de circuit imprimé 20, et une unité de connexion électrique 14 connectée à cette unité électronique 12, l'unité de connexion électrique 14 comportant une pluralité de voies d'échange de signaux, comme illustré sur la figure 11.

Un joint d'étanchéité 58 de forme sensiblement rectangulaire est prévu entre le connecteur 40 et la cuve 3.

En variante, un cordon de colle peut être utilisé à la place du joint.

Le connecteur 40 est fixé sur la cuve 3, dans l'exemple décrit, à l'aide de vis 59 (voir figure 9).

Dans les exemples qui viennent d'être décrits, la carte électronique 20 est disposée parallèlement au support associé.

En variante, comme on va le décrire maintenant, la carte électronique peut être disposée en porte-à-faux sur le support.

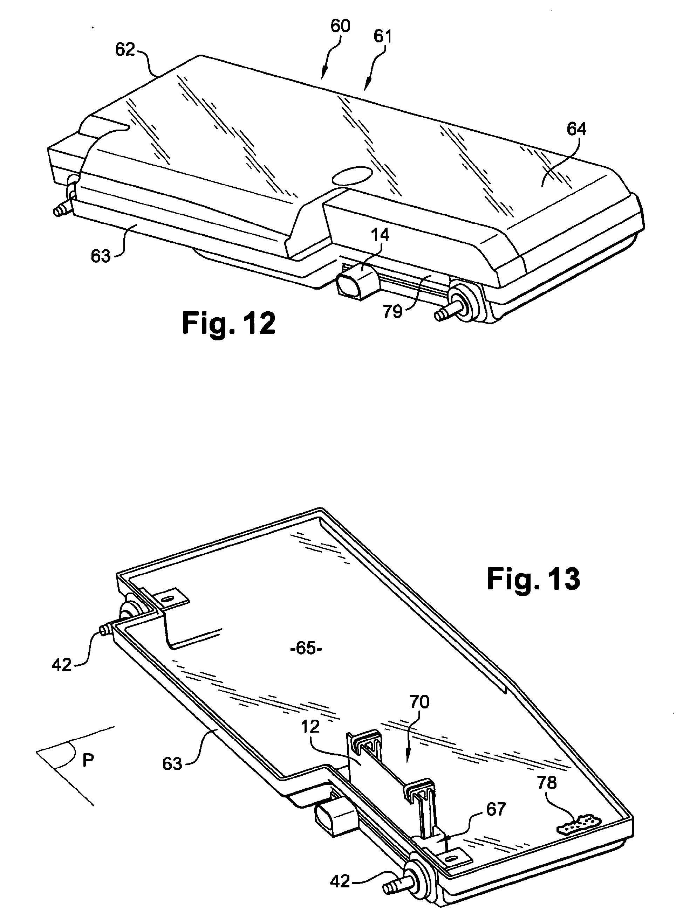

On a représenté sur les figures 12 et 13 un ensemble 60 comportant :
- un dispositif de stockage d'énergie 61 comprenant une pluralité de cellules de stockage d'énergie 2 et comportant une cuve 62 dans laquelle sont disposées les cellules de stockage d'énergie 2, la cuve 62 comportant des demi-coquilles inférieure 63 et supérieure 64 assemblées ensemble, la cuve 62 comprenant un fond 65 formé sur la demi-coquille inférieure 63 et un compartiment 67 débouchant à l'extérieur sur le fond 65 de la cuve 62,
- un connecteur 70 comportant une unité électronique 12 et un support 71 portant l'unité électronique 12, l'unité électronique 12 étant introduite dans ledit compartiment 67 de la cuve.

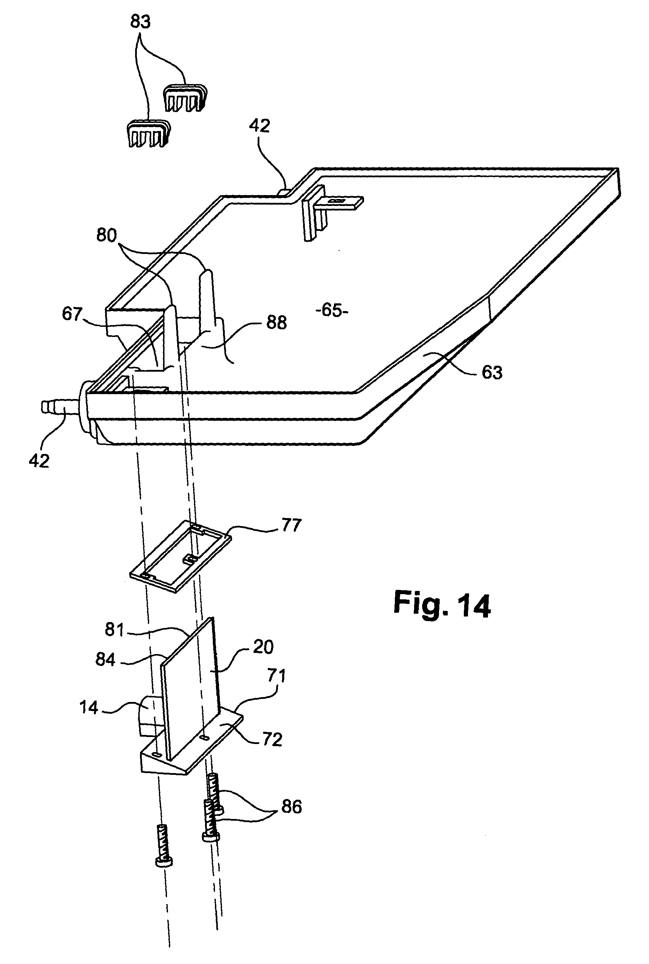

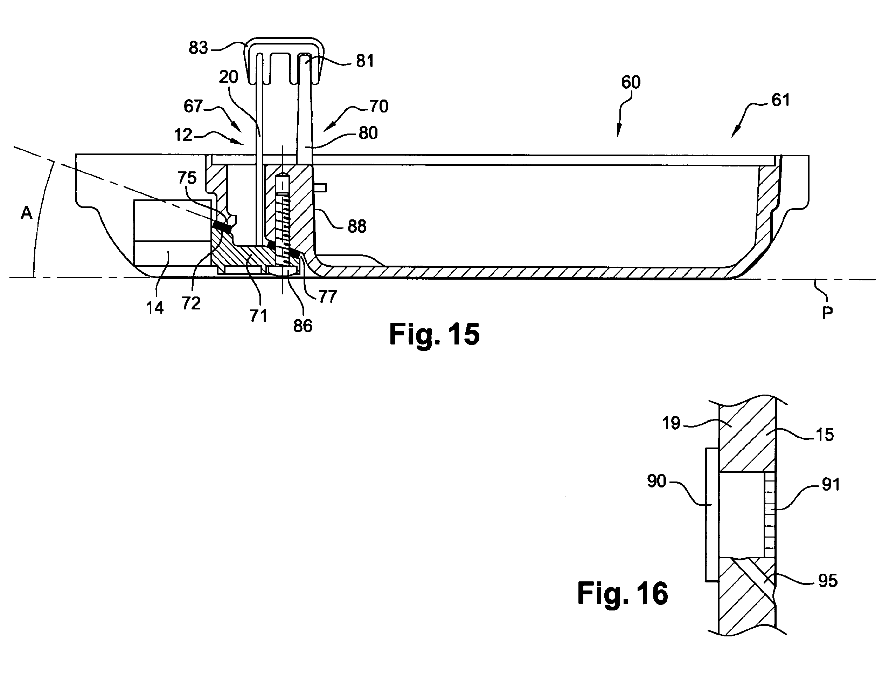

Le fond 65 de la cuve 62 s'étend sensiblement parallèlement à un plan P, et le support 71 du connecteur 70 comporte une face inclinée 72 par rapport au plan P, comme on peut le voir notamment sur les figures 14 et 15. L'angle d'inclinaison A est par exemple compris entre 10° et 45°.

Le compartiment 67 de la cuve 62 débouche sur le fond 65 par une face inclinée 75 contre laquelle s'applique la face inclinée 72 du support 71 du connecteur 70.

Un joint d'étanchéité 77, de forme sensiblement rectangulaire dans l'exemple décrit, est disposé entre les faces inclinées 72 et 75.

En variante, un cordon de colle peut être utilisé pour assurer l'étanchéité.

L'invention permet d'assurer une étanchéité satisfaisante entre l'intérieur et l'extérieur de la cuve 62, au niveau du connecteur.

L'unité électronique 12 comporte une carte électronique 20 s'étendant dans le compartiment 67 de la cuve 62 perpendiculairement au plan P du fond 65 de la cuve 62.

Comme illustré sur les figures 14 et 15, la demi-coquille inférieure 63 comporte deux pattes de maintien 80 et la carte électronique 20 est maintenue à l'aide de ces pattes de maintien 80 à une extrémité 81 de la carte 20 éloignée du fond 65 de la cuve 62, par l'intermédiaire d'agrafes 83, disposées entre la carte électronique 20 et les pattes de maintien 80.

Le support 71 de l'unité électronique 20 comporte une unité de connexion électrique 14, d'une part connectée à l'unité électronique 20 et d'autre part agencée pour pouvoir être connectée à un élément de connexion complémentaire, non représenté, depuis l'extérieur de la cuve.

L'unité de connexion électrique 14 s'étend sensiblement perpendiculairement à la carte électronique 20 et à la paroi latérale 79 de la cuve 62.

La carte électronique 20 est disposée sur le support 71 uniquement sensiblement le long d'un bord rectiligne de cette carte 20, laquelle comporte un autre bord rectiligne 84 éloigné du support 71.

Le connecteur 70 est fixé sur la cuve 62 par des vis 86.

L'ensemble 60 comporte deux bornes électriques de puissance 42 montées sur la cuve 62 à des emplacements distincts de celui du connecteur 70.

Une résine 78 est déposée dans le fond de la cuve, et le compartiment 67 de la cuve pour recevoir l'unité électronique 12 comporte un muret 88 séparant la résine de l'unité électronique.

Dans l'exemple considéré, l'unité électronique 12 présente une hauteur supérieure à celle de la demi-coquille 63 de la cuve 62 lorsque l'unité électronique 12 est introduite dans le compartiment 67 de la cuve.

Autrement dit, comme illustré sur la figure 15, la carte électronique 20 fait saillie en dehors de la demi-coquille 63.

Bien entendu, l'invention n'est pas limitée aux exemples de mise en oeuvre qui viennent d'être décrits.

Par exemple, le support 15 décrit en référence aux figures 2 à 6 peut comporter une paroi sensiblement plane 19, et l'unité d'aération comprend une membrane perméable à l'air 90 directement fixée sur la paroi 19 du support, comme illustré sur la figure 16.

Cette paroi 19 du support 15 peut comporter une portion formant grille 91 disposée sensiblement en regard de la membrane 90 de l'unité d'aération.

Lorsque la paroi 19 est verticale, un canal d'évacuation 95 de liquide peut être prévu dans cette paroi 19, entre la grille 91 et la membrane 90.

De préférence, ce canal d'évacuation 95 est incliné par rapport à la paroi 19 du support 15.

## Revendications

1. Connecteur (10) pour dispositif de stockage d'énergie, le connecteur comportant :
- une unité électronique (12) agencée pour l'un au moins commander le dispositif de stockage d'énergie et générer une information représentative de l'état du dispositif de stockage d'énergie,
- une unité de connexion électrique (14), d'une part, connectée à l'unité électronique et, d'autre part, agencée pour pouvoir être connectée à un élément de connexion complémentaire, cette unité de connexion présentant notamment une pluralité de voies d'échange de signaux,
- un support (15) réalisé d'un seul tenant, notamment par moulage d'une matière plastique, l'unité électronique et l'unité de connexion étant portées par ce support,
- une unité d'aération (16) portée par le support (15).

2. Connecteur selon la revendication précédente, **caractérisé par le fait que** l'unité d'aération (16) comporte une membrane perméable à l'air.

3. Connecteur selon l'une des deux revendications précédentes, **caractérisé par le fait que** le support comporte un orifice (17) et par le fait l'unité d'aération (16) est disposée dans cet orifice.

4. Connecteur selon l'une quelconque des revendications 2 à 3, le support comportant une paroi sensiblement plane (19) et l'unité électronique (12) étant disposée au moins partiellement en regard de cette paroi sensiblement plane, **caractérisé par le fait que** l'unité d'aération (16) est disposée en regard de l'unité électronique sur cette paroi sensiblement plane.

5. Connecteur selon l'une quelconque des revendications précédentes, **caractérisé par le fait qu'**il comporte une borne électrique de puissance (42) portée par le support.

6. Connecteur selon l'une quelconque des revendications précédentes, **caractérisé par le fait que** l'unité électronique comporte une carte électronique (20) fixée sur le support (15), notamment par sertissage, bouterollage ou vissage.

7. Connecteur selon l'une quelconque des revendications précédentes, le support étant réalisé en matière plastique, **caractérisé par le fait que** l'unité de connexion (14) comporte au moins un élément de contact électrique (23) partiellement noyé dans la matière plastique du support.

8. Connecteur selon l'une quelconque des revendications précédentes comportant **caractérisé par le fait qu'**il comporte :
- un support (41) réalisé en matière plastique,
- une armature (44) au moins partiellement noyée dans la matière plastique du support,
- une borne électrique de puissance (42) montée sur l'armature.

9. Connecteur selon l'une des revendications précédente, **caractérisé par le fait que** l'armature (44) comporte un cadre (45), notamment de forme sensiblement rectangulaire, et **par le fait que** cette armature comporte une portion de fixation (46) de la borne électrique de puissance s'étendant à l'intérieur du cadre.

10. Connecteur selon la revendication précédente, **caractérisé par le fait que** la portion de fixation (46) de la borne électrique est reliée au cadre par l'intermédiaire de deux branches (48).

11. Connecteur selon l'une quelconque des revendications précédentes, **caractérisé par le fait qu'**il comporte au moins une trace de puissance (50) disposée à proximité de la borne électrique de puissance (42), cette trace comportant une cosse métallique et étant notamment agencée pour être connectée à une batterie de stockage d'énergie.

12. Connecteur selon la revendication précédente, **caractérisé par le fait qu'**il comporte trois traces électriques (50) disposées autour de la borne électrique de puissance, ces trois traces formant notamment trois secteurs régulièrement répartis autour de la borne électrique de puissance.

13. Connecteur selon l'une des deux revendications précédentes, **caractérisé par le fait qu'**il comporte une bague isolante (55) sur laquelle s'étendent les traces de puissance, cette bague étant agencée de manière à ce que les traces s'étendent dans un plan surélevé par rapport à un plan du support.

14. Ensemble, notamment agencé pour être monté sur un véhicule automobile, comportant :
- un dispositif de stockage d'énergie (1), notamment comprenant une pluralité de cellules de stockage d'énergie (2), comportant une cuve (3), notamment dans laquelle sont disposées les cellules de stockage d'énergie,
- un connecteur (10) selon l'une quelconque des revendications précédentes, fixé sur la cuve du dispositif de stockage d'énergie.

15. Ensemble selon la revendication précédente, **caractérisé par le fait que** la cuve du dispositif de stockage d'énergie comporte une ouverture (7), notamment sur une paroi latérale (5) de la cuve, agencée pour recevoir partiellement le connecteur (10).

16. Ensemble selon l'une des deux revendications précédentes, **caractérisé par le fait que** les cellules de stockage d'énergie (2) sont partiellement noyées dans une résine déposée à l'intérieur de la cuve, et **par le fait que** la cuve comporte un muret agencé pour séparer la résine d'un compartiment recevant le connecteur.

17. Ensemble selon l'une quelconque des revendications 14 à 16, **caractérisé par le fait que** l'unité électronique (12) du connecteur est agencée pour permettre l'équilibrage de la charge électrique entre les cellules de stockage d'énergie.

## Claims

1. Connector (10) for an energy storage device, the connector comprising:
- an electronic unit (12) designed to at least control the energy storage device and to generate an item of information representative of the state of the energy storage device,
- an electrical connection unit (14) on the one hand connected to the electronic unit and, on the other hand, designed to be able to be connected to a complementary connection element, this connection unit having in particular a plurality of signal exchange channels,
- a support (15) produced in one piece, in particular by moulding a plastic material, the electronic unit and the connection unit being carried by this support,
- a ventilation unit (16) carried by the support (15).

2. Connector according to the preceding claim, **characterized in that** the ventilation unit (16) comprises a membrane which is permeable to air.

3. Connector according to one of the two preceding claims, **characterized in that** the support comprises an orifice (17) and **in that** the ventilation unit (16) is disposed in this orifice.

4. Connector according to any one of Claims 2 to 3, the support comprising a substantially flat wall (19) and the electronic unit (12) being disposed at least partially facing this substantially flat wall, **characterized in that** the ventilation unit (16) is disposed opposite the electronic unit on this substantially flat wall.

5. Connector according to any one of the preceding claims, **characterized in that** it comprises an electrical power terminal (42) carried by the support.

6. Connector according to any one of the preceding claims, **characterized in that** the electronic unit comprises an electronic board (20) fixed on the support (15), In particular by crimping, heading or screwing.

7. Connector according to any one of the preceding claims, the support being made of plastic material, **characterized in that** the connection unit (14) comprises at least one electrical contact element (23) partially embedded in the plastic material of the support.

8. Connector according to any one of the preceding claims, **characterized in that** it comprises:
- a support (41) made of plastic material,
- a framework (44) at least partially embedded in the plastic material of the support,
- an electrical power terminal (42) mounted on the framework.

9. Connector according to one of the preceding claims, **characterized in that** the framework (44) comprises a frame (45), in particular of substantially rectangular shape, and **in that** this framework comprises a portion (46) for fixing the electrical power terminal extending inside the frame.

10. Connector according to the preceding claim, **characterized in that** the portion (46) for fixing the electrical terminal is connected to the frame by the intermediary of two branches (48).

11. Connector according to any one of the preceding claims, **characterized in that** it comprises at least one power track (50) disposed in the vicinity of the electrical power terminal (42), this track comprising a metal lug and in particular being designed to be connected to an energy storage battery.

12. Connector according to the preceding claim, **characterized in that** it comprises three electrical tracks (50) disposed around the electrical power terminal, these three tracks forming in particular three sectors regularly distributed around the electrical power terminal.

13. Connector according to one of the two preceding claims, **characterized in that** it comprises an insulating ring (55) upon which extend the power tracks, this ring being designed in such a way that the tracks extend in a raised plane with respect to a plane of the support.

14. Assembly, in particular designed to be fitted on a motor vehicle, comprising:
- an energy storage device (1), in particular a plurality of energy storage cells (2), comprising a tank (3), in particular within which are disposed the energy storage cells,
- a connector (10) according to any one of the preceding claims, fixed on the tank of the energy storage device.

15. Assembly according to the preceding claim, **characterized in that** the tank of the energy storage device comprises an opening (7), in particular on a side wall (5) of the tank, designed to partially receive the connector (10).

16. Assembly according to one of the two preceding claims, **characterized in that** the energy storage cells (2) are partially embedded in a resin deposited inside the tank, and **in that** the tank comprises a low wall arranged to separate the resin from a compartment receiving the connector.

17. Assembly according to any one of Claims 14 to 16, **characterized in that** the electronic unit (12) of the connector is designed to allow the balancing of the electrical charge between the energy storage cells.

## Patentansprüche

1. Verbinder (10) für eine Energiespeichervorrichtung, wobei der Verbinder umfasst:
- eine elektronische Einheit (12), die dazu ausgelegt ist, die Energiespeichervorrichtung zu steuern und/oder Informationen zu erzeugen, die den Zustand der Energiespeichervorrichtung repräsentieren,
- eine elektrische Anschlusseinheit (14), die einerseits mit der elektronischen Einheit verbunden ist und andererseits dazu ausgelegt ist, mit einem komplementären Anschlusselement verbunden zu werden, wobei diese Anschlusseinheit insbesondere mehrere Signalaustauschwege aufweist,
- einen Träger (15), der einteilig insbesondere durch Gießen aus Kunststoff hergestellt ist, wobei die elektronische Einheit und die Anschlusseinheit durch diesen Träger getragen werden,
- eine Belüftungseinheit (16), die durch den Träger (15) getragen wird.

2. Verbinder nach dem vorhergehenden Anspruch, **dadurch gekennzeichnet, dass** die Belüftungseinheit (16) eine für Luft durchlässige Membran enthält.

3. Verbinder nach einem der vorhergehenden Ansprüche, **dadurch gekennzeichnet, dass** der Träger eine Öffnung (17) aufweist und dass die Belüftungseinheit (16) in dieser Öffnung angeordnet ist.

4. Verbinder nach einem der Ansprüche 2 bis 3, wobei der Träger eine im Wesentlichen ebene Wand (19) aufweist und die elektronische Einheit (12) wenigstens teilweise gegenüber dieser im Wesentlichen ebenen Wand angeordnet ist, **dadurch gekennzeichnet, dass** die Belüftungseinheit (16) gegenüber der elektronischen Einheit an dieser im Wesentlichen ebenen Wand angeordnet ist.

5. Verbinder nach einem der vorhergehenden Ansprüche, **dadurch gekennzeichnet, dass** er einen durch den Träger getragenen Anschluss (42) für elektrische Leistung aufweist.

6. Verbinder nach einem der vorhergehenden Ansprüche, **dadurch gekennzeichnet, dass** die elektronische Einheit eine an dem Träger (15) insbesondere durch Crimpen, Vernieten oder Verschrauben befestigte elektronische Karte (20) aufweist.

7. Verbinder nach einem der vorhergehenden Ansprüche, wobei der Träger aus Kunststoff hergestellt ist, **dadurch gekennzeichnet, dass** die Anschlusseinheit (14) wenigstens ein elektrisches Kontaktelement (23) aufweist, das teilweise in den Kunststoff des Trägers getaucht ist.

8. Verbinder nach einem der vorhergehenden Ansprüche, **dadurch gekennzeichnet, dass** er umfasst:
- einen Träger (41), der aus Kunststoff hergestellt ist,
- einen Anker (44), der wenigstens teilweise in den Kunststoff des Trägers getaucht ist,
- einen elektrischen Leistungsanschluss (42), der am Anker montiert ist.

9. Verbinder nach einem der vorhergehenden Ansprüche, **dadurch gekennzeichnet, dass** der Anker (44) einen Rahmen (45) insbesondere mit im Wesentlichen rechtwinkliger Form umfasst und dass dieser Anker einen Befestigungsabschnitt (46) für den elektrischen Leistungsanschluss aufweist, der sich in dem Rahmen erstreckt.

10. Verbinder nach dem vorhergehenden Anspruch, **dadurch gekennzeichnet, dass** der Befestigungsabschnitt (46) für den elektrischen Anschluss mit dem Rahmen über zwei Schenkel (48) verbunden ist.

11. Verbinder nach einem der vorhergehenden Ansprüche, **dadurch gekennzeichnet, dass** er wenigstens eine Leistungsbahn (50) aufweist, die in der Nähe des elektrischen Leistungsanschlusses (42) angeordnet ist, wobei diese Bahn eine metallische Hülse aufweist und insbesondere dazu ausgelegt ist, mit einer Energiespeicherbatterie verbunden zu werden.

12. Verbinder nach dem vorhergehenden Anspruch, **dadurch gekennzeichnet, dass** er drei elektrische Bahnen (50) umfasst, die um den elektrischen Leistungsanschluss angeordnet sind, wobei diese drei Bahnen insbesondere drei Sektoren bilden, die um den elektrischen Leistungsanschluss regelmäßig verteilt sind.

13. Verbinder nach einem der vorhergehenden Ansprüche, **dadurch gekennzeichnet, dass** er einen Isolierring (55) aufweist, auf dem die Leistungsbahnen verlaufen, wobei dieser Ring in der Weise angeordnet ist, dass die Bahnen in einer in Bezug auf die Ebene des Trägers erhöhten Ebene verlaufen.

14. Anordnung, die insbesondere dazu ausgelegt ist, an einem Kraftfahrzeug montiert zu werden, die umfasst:
- eine Energiespeichervorrichtung (1), die insbesondere mehrere Energiespeicherzellen (2) umfasst und eine Wanne (3) aufweist, in der insbesondere die Energiespeicherzellen angeordnet sind,
- einen Verbinder (10) nach einem der vorhergehenden Ansprüche, der an der Wanne der Energiespeichervorrichtung befestigt ist.

15. Anordnung nach dem vorhergehenden Anspruch, **dadurch gekennzeichnet, dass** die Wanne der Energiespeichervorrichtung eine Öffnung (7) insbesondere in einer Seitenwand (5) der Wanne aufweist, die dazu ausgelegt ist, den Verbinder (10) teilweise aufzunehmen.

16. Anordnung nach einem der vorhergehenden Ansprüche, **dadurch gekennzeichnet, dass** die Energiespeicherzellen (2) teilweise in ein Harz getaucht sind, das in der Wanne abgelagert ist, und dass die Wanne einen Raumteiler aufweist, der dazu ausgelegt ist, das Harz eines Fachs, das den Verbinder aufnimmt, abzuteilen.

17. Anordnung nach einem der Ansprüche 14 bis 16, **dadurch gekennzeichnet, dass** die elektronische Einheit (12) des Verbinders dazu ausgelegt ist, einen Ausgleich der elektrischen Ladung zwischen den Energiespeicherzellen zu ermöglichen.
